# EUROPÄISCHE PATENTSCHRIFT

(11) **EP 2 014 354 B1**
(45) Veröffentlichungstag und Bekanntmachung des Hinweises auf die Patenterteilung: **12.10.2011**
(21) Anmeldenummer: 08012175.9
(22) Anmeldetag: 05.07.2008
(51) Int. Cl.: B01F 17/08, C08F 2/26, C09B 67/46

(54) **Wässrige Zusammensetzungen enthaltend Alkylpolyethylenglykolethersulfate**
Aqueous compositions containing alkyl polyethylene glycol ether sulfates
Compositions aqueuses contenant du sulfates d'ester d'alkyle polyéthylène glycol

(30) Priorität: 13.07.2007 DE 102007032670
(43) Veröffentlichungstag der Anmeldung: 14.01.2009
(73) Patentinhaber: Clariant Finance (BVI) Limited, Road Town, Tortola (VG)
(72) Erfinder: Ahrens, Hendrik, 65931 Frankfurt am Main (DE); Maier, Guillermo, 84533 Haiming (DE); Raab, Klaus, 84508 Burgkirchen (DE)
(74) Vertreter: Mikulecky, Klaus

(56) Entgegenhaltungen:
- EP-A- 0 256 427
- EP-A- 0 401 642
- WO-A-97/00843
- FR-A- 1 078 415
- US-A- 4 075 129
- J. FALBE (ED.): "Surfactants in Consumer Products" 1987, SPRINGER-VERLAG , HEIDELBERG , XP002502947 * Seite 67 - Seite 69 *

## Beschreibung

Gegenstand der vorliegenden Erfindung sind wässrige, fließfähige Zusammensetzungen enthaltend Alkylpolyethylenglykolethersulfate mit einem Wirkstoffgehalt von mehr als 75 Gew.-%, ein Verfahren zu deren Herstellung und ihre Verwendung.

Die Herstellung und Verarbeitung von wässrigen Zusammensetzungen von Alkylpolyethylenglykolethersulfaten mit hohem Wirkstoffgehalt wird oft dadurch erschwert, dass diese Lösungen hochviskos und wenig fließfähig sind. Wässrige Zusammensetzungen von Alkylpolyethylenglykolethersulfaten sind bis zu einem Wirkstoffgehalt von etwa 30 Gew.-% bei Raumtemperatur in der Regel fließfähig und zeigen Viskositäten von bis zu 500 mPa·s, üblicherweise bis 100 mPa·s. Als Messgerät für die Viskosität solcher Zusammensetzungen eignet sich das Brookfield-Viskosimeter.

Die Viskosität von höher konzentrierten wässrigen Zusammensetzungen von Alkylpolyethylenglykolethersulfaten mit einem Wirkstoffgehalt von mehr als 30 Gew.-% ist temperaturabhängig, so dass diese Zusammensetzungen durch Erwärmen zum Fließen gebracht werden können, jedoch ist das Temperieren solcher Zusammensetzungen mit Problemen verbunden. Einerseits stehen nicht überall temperierbare Behälter zur Verfügung. Andererseits neigen Alkylpolyethylenglykolethersulfate bei höheren Temperaturen zur Hydrolyse, so dass die Ethersulfatbindung gespalten wird und die Wirkstoffkonzentration abnimmt.

Eine Reduzierung der Viskosität kann auch durch Zusätze bestimmter Stoffe erfolgen. WO-91/02045 beschreibt den Zusatz von Ölsäuresulfonaten und anderer Komponenten als Viskositätsregler zu wässrigen Aniontensidkonzentraten, die Alkylpolyethylenglykolethersulfate enthalten.

EP-A-0 401 642 offenbart Sulfate von Isostearylalkohol bzw. Isostearylpolyalkylenglycolethem, die durch Sulfatierung von Isostearylalkohol bzw. Isostearylpolyalkylenglycolethem der allgemeinen Formel (I),

R - O - [CₙH₂ₙO]ₓH (I)

in der
n für ganze Zahlen von 2 bis 4
x für 0 oder Zahlen von 0,1 bis 20 und
R für einen methylverzweigten Alkylrest mit insgesamt 18 C-Atomen steht sowie anschließender Neutralisation der Sulfatierungsprodukte mit Basen erhältlich sind, und deren Verwendung als oberflächenaktive Mittel.

US-4075129 offenbart eine Reinigungsmittelmischung enthaltend 0,5 bis 60 Gew.-% eines ein Ethersulfat darstellenden oberflächenaktiven Mittels, das aus zwei Bestandteilen A und B besteht, wobei
(A) bis zu 70 Gew.-% eines unverzweigten Alkylethersulfats der Formel:

   R₁ - O - (CH₂CH₂O)ₙSO₃M

   und
(B) als Restmenge ein verzweigtes Alkylethersulfat der Formel: 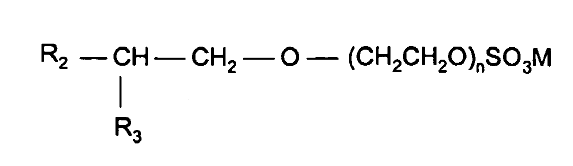 darstellt, in denen R₁ ein unverzweigtes Alkyl mit einer Kohlenstoffzahl im Bereich von 6 bis 15 bedeutet, wobei die durchschnittliche Kohlenstoffanzahl in R₁ der Formel (A) im Bereich von 8 bis 13 liegt, R₂ ein unverzweigtes Alkyl mit einer Kohlenstoffanzahl in der Größenordnung von 1 bis 12 bedeutet, und R₃ ein unverzweigtes Alkyl mit einer Kohlenstoffanzahl im Bereich von 1 bis 4 bedeutet, unter der Bedingung, dass die Gruppe: 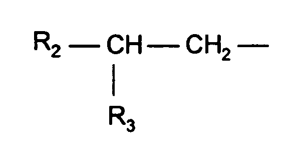 eine durchschnittliche Anzahl von Kohlenstoffatomen im Bereich von 8 bis 13 aufweiset, n eine Zahl im Durchschnitt von 0,5 bis 1,5 sowohl bei der Verbindung (A) als auch bei der Verbindung (B) bedeutet, und M ein wasserlösliches Kation ist, das aus Alkali, Erdalkali oder Alkanolamin besteht.

FR-A-1078415 offenbart die Verwendung von Verbindungen der allgemeinen Formel 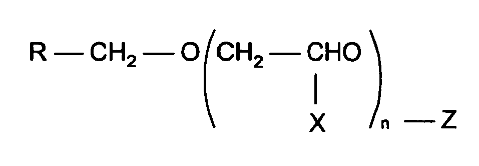 worin R eine Alkylgruppe von 9 bis 19 Kohlenstoffatomen mit mehr als zwei Seitenketten, X Wasserstoff oder die CH₃-Gruppe, n eine Zahl von 1 bis 12, vorzugsweise von 2 bis 10, und Z Wasserstoff, die SO₃H- oder die PO₃H₂-Gruppe darstellt, wobei das Kation des Säurerests auch durch Alkali, Erdalkali oder Ammonium ersetzt oder an ein Amin gebunden sein kann, als oberflächenaktive Mittel. J. Falbe (Hrsg.), "Surfactants in Consumer Products", 1987, pp. 67 - 69 offenbart, dass Alkylpolyethylenglykolethersulfate der Formel

RO - (CH₂ - CH₂ - O)ₙ - SO₃H

Allein oder in Mischung mit anderen oberflächenaktiven Mitteln als Bestandteil von Reinigungsmitteln dienen können.

US-4 191 704 beschreibt die Regelung der Viskosität durch Neutralisieren mit Alkylaminen und Alkanolaminen anstelle von Natronlauge, wodurch das resultierende Neutralisat auch bei Wirkstoffgehalten von mehr als 60 Gew.-% fließfähig ist.

Das Verfahren zur Herstellung von wässrigen Zusammensetzungen von Alkylpolyethylenglykolethersulfaten wird in US-2 644 831, US-2 654 772, US-2 758 977 und US-2 214 254 beschrieben.

Ein weiteres Verfahren zur Herstellung von Alkylpolyethylenglykolethersulfaten mittels Schwefeltrioxid beschreibt WO-91/05764.

Die Herstellung von wässrigen Konzentraten von Fettalkoholethersulfat-Erdalkalisalzen mit einem Feststoffgehalt von 50 bis 75 Gew.-% wird in DE-A-44 46 363 beschrieben.

Alkylpolyethylenglykolethersulfate werden als Tenside beispielsweise in der Waschmittel- und Kosmetikindustrie, in industriellen oder gewerblichen Reinigungsmitteln und Haushaltsreinigungsmitteln, als Dispergier- und Netzmittel beispielsweise in Pigmentdispersionen oder als Emulgatoren in der Emulsionspolymerisation verwendet.

Der vorliegenden Erfindung lag die Aufgabe zugrunde, konzentrierte wässrige Zusammensetzungen von Alkylpolyethylenglykolethersulfaten mit einem Wirkstoffgehalt von mehr als 75 Gew.-% bereitzustellen, die bei Raumtemperatur ein ausreichendes Fließverhalten zeigen und sich einfach dosieren lassen. Der gegenüber dem Stand der Technik deutlich abgesenkte Wassergehalt und der erhöhte Wirkstoffgehalt verringern die Transportkosten pro Gewichtseinheit Wirkstoff und ermöglichen es, auf den bei manchen Anwendungen störenden Zusatz von Konservierungsmitteln zu verzichten.

Es wurde gefunden, dass Alkalimetall- oder Ammoniumsalze von Mischungen aus verzweigten und linearen Alkylpolyethylenglykolethersulfaten bei einem Wirkstoffgehalt zwischen 75 und 90 Gew.-% in wässrigen Zusammensetzungen Lösungen bilden, die fließfähig, gut dosierbar und pumpbar sind.

Gegenstand der Erfindung sind wässrige Zusammensetzungen, die neben Wasser 75 bis 90 Gew.-% Alkylpolyethylenglykolethersulfate enthalten, die eine Mischung aus Verbindungen der Formel (1)

R¹ - O - (CH₂-CH₂-O)ₓ - SO₃M (1)

worin
R¹ eine verzweigte Alkyl- oder Alkenylgruppe mit 8 bis 14 Kohlenstoffatomen und mindestens einem tertiären C-Atom,
x eine Zahl von 3 bis 15,
M ein Alkalimetall- oder Ammoniumion bedeuten,
mit solchen der Formel (2)

R² - O - (CH₂-CH₂-O)_{y} - SO₃M' (2)

worin
R² eine lineare Alkyl- oder Alkenylgruppe mit 8 bis 14 Kohlenstoffatomen,
y eine Zahl von 3 bis 15,
M' ein Alkalimetall- oder Ammoniumion bedeuten, sind
wobei das Mischungsverhältnis von Verbindungen der Formeln (1) und (2) so gewählt ist, dass die Verbindungen der Formel (1) mindestens 10 und höchstens 99, vorzugsweise mindestens 20 und höchstens 90, insbesondere mindestens 30 und höchstens 80 Gew.-% der Gesamtmenge an Verbindungen der Formeln (1) und (2) ausmachen.

In den Verbindungen der Formeln (1) und (2) stehen R¹ und R² vorzugsweise für primäre Alkyl- oder Alkenylreste, d. h. Reste, die über ein primäres Kohlenstoffatom an das Sauerstoffatom gebunden sind.

In der Formel (1) bedeutet R¹ bevorzugt eine verzweigte Alkylgruppe mit 9 bis 13, insbesondere 10 bis 12 Kohlenstoffatomen und mindestens einem tertiären C-Atom. R¹ enthält in einer weiteren bevorzugten Ausführungsform 1 bis 5 tertiäre Kohlenstoffatome.
x steht vorzugsweise für eine Zahl von 5 bis 10.
M steht vorzugsweise für Natrium.

In der Formel (2) bedeutet R² bevorzugt eine lineare Alkylgruppe mit 9 bis 13, insbesondere 10 bis 12 Kohlenstoffatomen.
y steht vorzugsweise für eine Zahl von 5 bis 10.
M' steht vorzugsweise für Natrium.
x und y stehen, sofern die Poly(oxethylen)-Einheiten der Formeln (CH₂-CH₂-O)ₓ bzw. (CH₂-CH₂-O)_{y} der Verbindungen der Formeln (1) und (2) keine einheitlichen Längen aufweisen, für die mittlere Zahl der Oxethylen-Einheiten.

Die erfindungsgemäßen Zusammensetzungen enthalten 75 bis 90 Gew.-%, insbesondere 80 bis 88 Gew.-% Verbindungen der Formel (1) und, der Formel (2).

In einer weiteren bevorzugten Ausführungsform enthalten die erfindungsgemäßen Zusammensetzungen 5 bis 25 Gew.-%., insbesondere 6 bis 20 Gew.-% Wasser. In einer weiteren bevorzugten Ausführungsform enthalten die erfindungsgemäßen Zusammensetzungen Wasser ad 100 Gew.-%.

Die erfindungsgemäßen Zusammensetzungen können bis zu 5 Gew.-%, in der Regel 0,5 bis 4 Gew.-% der bei der Herstellung von Alkalisalzen der Alkylpolyethylenglykolethersulfate primärer Alkohole üblicherweise anfallenden Nebenkomponenten, wie Alkalisulfate, Alkalichloride oder andere Alkalisalze und nichtsulfatierte Anteile wie Polyethylenglykole, Alkylpolyethylenglykole und Alkohole der Formeln R¹-OH und R²-OH enthalten.

In einer weiteren bevorzugten Ausführungsform können die erfindungsgemäßen Zusammensetzungen durch Beimischung in Summe bis zu 3 Gew.-%, vorzugsweise 0,1 bis 2 Gew.-% Zusatzstoffe wie pH-Puffer, beispielsweise Natriumcarbonat, Natriumhydrogencarbonat oder Natriumcitrat, Lösemittel oder Viskositätsregler enthalten. Die Beimischung von Konservierungsmitteln zur Verhinderung des Wachstums von Keimen in den erfindungsgemäßen wässrigen Zusammensetzungen ist zwar möglich, aber nicht erforderlich und kann wegen des hohen Gehalts an Alkalimetall- oder Ammonium- Alkylpolyethylenglykolethersulfaten (Wirkstoffgehalt) und des niedrigen Wassergehalts unterbleiben.

Der Wirkstoffgehalt der Zusammensetzungen lässt sich nach der in der Norm ISO 2271 beschriebenen Methode bestimmen.

Die Herstellung der erfindungsgemäßen Zusammensetzungen erfolgt durch Umsetzung von Alkylpolyethylenglykolen der Formel R¹-O-(CH₂-CH₂-O)ₓ-H oder Mischungen von Alkylpolyethylenglykolen der Formeln R¹-O-(CH₂-CH₂-O)ₓ-H und R²-O-(CH₂-CH₂-O)_{y}-H mit SO₃ oder einem anderen Sulfatierungsmittel wie zum Beispiel Oleum, Amidosulfonsäure oder Chlorsulfonsäure. Das bevorzugte Sulfatierungsmittel ist SO₃, insbesondere gasförmiges SO₃, das mit einem Inertgas wie beispielsweise Luft oder Stickstoff verdünnt sein kann. Pro 1 Mol Alkylpolyethylenglykol werden 0,9 bis 1,3 mol SO₃ oder ein anderes Sulfatierungsmittel, insbesondere 1,0 bis 1,1 mol SO₃ oder ein anderes Sulfatierungsmittel eingesetzt. Die entstehenden Schwefelsäurehalbester der Formel R¹-O-(CH₂-CH₂-O)ₓ-SO₃H bzw. R²-O-(CH₂-CH₂-O)_{y}- SO₃H werden mit Basen wie beispielsweise Alkalimetallhydroxiden oder Ammoniak, bevorzugt mit den konzentrierten wässrigen Lösungen dieser Basen, insbesondere mit Natronlauge, am besten unmittelbar nach Bildung der Schwefelsäurehalbester unter guter Durchmischung und Kühlung neutralisiert. Die benötigte Menge an Base wird durch Säure-Base-Titration einer Probe des entstandenen Schwefelsäurehalbesters oder durch kontinuierliche on-line Potential-Messung ermittelt. Abhängig vom gewünschten pH-Wert der erfindungsgemäßen Zusammensetzung werden in der Regel für 1 mol eingesetztes SO₃ 0,99 bis 1,1 mol Base eingesetzt. Die bevorzugte Base ist 50 %ige Natronlauge. Die Neutralisationstemperatur beträgt 30 bis 80 °C, vorzugsweise 40 bis 60 °C. Sowohl die Umsetzung mit SO₃ als auch die Neutralisation erfolgen bevorzugt in kontinuierlicher Fahrweise. Der Wassergehalt kann unter Berücksichtigung des bei der Neutralisation gebildeten Wassers und des Wassergehalts der wässrigen Base ungefähr berechnet und durch Karl-Fischer Titration genau bestimmt werden. Nach Zugabe von weiterem Wasser falls erforderlich und Zugabe der gewünschten Beimischungen, wie etwa Puffer zur Einstellung eines bestimmten pH-Werts beispielsweise im Bereich von pH 6 bis 8, werden die erfindungsgemäßen konzentrierten wässrigen Zusammensetzungen von Alkylpolyethylenglykolethersulfaten erhalten.

Das Verfahren führt zu bei 25 °C fließfähigen Zusammensetzungen. In einer bevorzugten Ausführungsform weisen die erhaltenen Zusammensetzungen eine Viskosität von maximal 5.000 mPa·s auf, was Fließfähigkeit bedeutet.

Gegenüber bisher verfügbaren Alkylpolyethylenglykolethersulfaten haben die erfindungsgemäßen hochkonzentrierten Zusammensetzungen aus Alkylpolyethylenglykolethersulfat und Wasser den Vorteil, dass auf eine Konservierung verzichtet werden kann. Dies ist dann ein Vorteil, wenn die erfindungsgemäßen Zusammensetzungen als Emulgatoren in der Emulsionspolymerisation Verwendung finden und die damit hergestellten Polymerdispersionen in Anwendungen mit Lebensmittelkontakt eingesetzt werden, in denen nur wenige Konservierungsmittel zulässig sind, z. B. als Bindemittel und Filmbildner für das Beschichten von Verpackungen, Papier, Metallen und für Klebstoffe.

Ein weiterer Vorteil der erfindungsgemäßen Zusammensetzungen ist der geringe Wassergehalt. In einigen Anwendungen stört die in den Zusammensetzungen des Standes der Technik enthaltene relativ große Menge an Wasser. Um flüssige, fließfähige Produkte zu erhalten, wurden die bisher verfügbaren Lösungen an Alkylpolyethylenglykolethersulfaten auf einen Wirkstoffgehalt von ca. 30 % eingestellt. Der Differenzbetrag bestand weitgehend aus Wasser. Bei der Herstellung von hochkonzentrierten Pigmentpräparationen werden bevorzugt hochkonzentrierte Dispergiermittel eingesetzt. Bei mit Wasser verdünnten Dispergiermitteln wird die hergestellte Pigmentpräparation ungewollt verdünnt. Die erfindungsgemäßen Zusammensetzungen lassen sich aufgrund des geringen Wassergehaltes gut als Dispergiermittel für hochkonzentrierte Pigmentpräparationen einsetzen.

### Beispiel 1

Ein Alkylpolyethylenglykol wurde durch Ethoxylierung eines primären Alkohols, dessen Alkylkette zu ca. 50 % aus einfach verzweigten Kohlenstoffketten und zu ca. 50 % aus linearen Kohlenstoffketten bestand und dessen mittlere Kohlenstoffkettenlänge 11 Kohlenstoffatome betrug, mit Ethylenoxid im Molverhältnis primärer Alkohol zu Ethylenoxid 1 : 7 hergestellt. Dieses Alkylpolyethylenglykol mit einem mittleren Ethoxylierungsgrad von 7 Ethylenglykoleinheiten wurde bei 50 °C kontinuierlich mit einer äquimolaren Menge Schwefeltrioxid zum entsprechenden Schwefelsäurehalbester umgesetzt. 500 g dieses flüssigen Schwefelsäurehalbesters und 73,5 g einer 50 %igen wässrigen Natronlauge wurden aus zwei Tropftrichtern gemeinsam in einen auf 40 bis 46 °C gekühlten Rührbehälter mit einem wandgängigen Rührer dosiert. Damit nicht zu viel Schaum entsteht, sollte nicht zu rasch gerührt werden. Mit wenig wässriger Natriumcarbonat-Lösung wurde ein pH-Wert von 8 eingestellt. Die Messung des pH-Wertes erfolgte nach Ziehen einer kleinen Teilprobe, die ausschließlich zur pH-Messung mit Wasser auf einen Gehalt von 1 % Wirkstoff verdünnt worden war.

Die bei 20 °C flüssige Zusammensetzung hatte folgende Zusammensetzung:

| | |
|---|---|
| ca. 86 % | Natriumalkylpolyethylenglykolethersulfat mit 7 Ethylenglykoleinheiten (berechnet aus Epton-Titration unter Annahme einer mittleren Molmasse von 577 g/mol) |
| ca. 9 % | Wasser (Karl-Fischer Titration) |
| ca. 0,7 % | Natriumsulfat |
| ca. 2,7 % | nicht umgesetzte Alkylpolyethylenglykolether (Neutralteilbestimmung). |

### Beispiel 2

Ein analog zu Beispiel 1 durchgeführter Betriebsansatz mit vergrößerten Einsatzmengen führte zu einer bei Raumtemperatur flüssigen Zusammensetzung mit folgender Zusammensetzung:

| | |
|---|---|
| ca. 86 % | Natriumalkylpolyethylenglykolethersulfat mit 7 Ethylenglykoleinheiten |
| ca. 12 % | Wasser |
| ca. 1 % | Natriumsulfat |
| ca. 1 % | nicht umgesetzter Alkylpolyethylenglykolether. |

Die Zusammensetzung zeigte einen pH-Wert von 7,6 (gemessen in Wasser bei 1 % Wirkstoff) und bei 25 °C eine Brookfield-Viskosität von ca. 200 mPa_{·}s.

### Beispiel 3

Eine flüssige 30 %ige wässrige Lösung von Natriumalkylpolyethylenglykolethersulfat mit durchschnittlich etwa 7 Ethylenglykoleinheiten und mit einer Alkylkette, die zu 47 % aus verschiedenen verzweigten C₁₁H₂₃-Gruppen, zu 47 % aus einer geradkettigen C₁₁H₂₃-Gruppe und zu 6 % aus C₁₀H₂₁- und C₁₂H₂₅-Gruppen bestand, wurde bei 30 bis 50 °C und einem Druck von etwa 5 mbar sehr langsam in einen Rotationsverdampfer dosiert. Unter starkem Schäumen wurde das Wasser abdestilliert, bis ein Restwassergehalt von 1,3 % (Karl-Fischer Titration) und ein Wirkstoffgehalt von 94 % (Epton-Titration) erreicht worden war. Dieses bei 20 °C und selbst bei 40 °C noch feste, nicht fließfähige Zwischenprodukt mit einem Tropfpunkt von 85 °C wurde durch Zugabe und mechanisches Einarbeiten von zusätzlich 7,4 % Wasser zu einer bei 20 °C flüssigen und fließfähigen Zusammensetzung mit einem Wirkstoffgehalt von 87,5 %.

### Vergleichsbeispiel

Eine flüssige verdünnte wässrige Lösung von Natriumalkylbis(ethylenglykol)ethersulfat mit durchschnittlich etwa zwei Ethylenglykoleinheiten und mit einer Alkylkette, die zu 70 % aus einer geradkettigen C₁₂H₂₅-Gruppe, 26 % aus einer geradkettigen C₁₄H₂₉-Gruppe und zu 4 % aus einer geradkettigen C₁₆H₃₃-Gruppe bestand, wurde bei 30 bis 50 °C und einem Druck von etwa 5 mbar sehr langsam in einen Rotationsverdampfer dosiert. Unter starkem Schäumen wurde das Wasser abdestilliert, bis ein Wirkstoffgehalt von 92 % (Epton-Titration) erreicht worden war. Durch Zugabe und mechanisches Einarbeiten von verschiedenen Mengen an Wasser wurden vier Mischungen mit einem Wirkstoffgehalt von 90 %, 85 %, 80 % und 75 % hergestellt, die alle bei 20 °C feste, nicht fließfähige Pasten waren.

### Anwendungsbeispiel 1 zur Herstellung einer Polymerdispersion mittels der erfindungsgemäßen Zusammensetzung aus Beispiel 1

Es werden 1800,0 g einer Monomeremulsion bestehend aus 410,3 g vollentsalztem Wasser, 23,5 g der erfindungsgemäßen Zusammensetzung aus Beispiel 1, 2,2 g Dodecylmercaptan, 150,0 g Methylmethacrylat, 350,0 g 2-Ethylhexylacrylat, 850,0 g n-Butylacrylat und 14,0 g Methacrylsäure sowie 57,0 g einer Initiatorlösung bestehend aus 7,1 g Ammoniumperoxodisulfat und 49,9 g vollentsalztem Wasser hergestellt.

In einem 3 Liter Reaktionsgefäß werden 263,0 g vollentsalztes Wasser vorgelegt und unter Stickstoffatmosphäre über ein Wasserbad auf 80 °C erwärmt. Anschließend werden 17,0 g der Initiatorlösung zugegeben und sofort mit der kontinuierlichen Zugabe der 1800,0 g Monomeremulsion und der restlichen 40,0 g Initiatorlösung begonnen. Die Dosierung beider Komponenten erfolgt unter ständigem Rühren mit einem Ankerrührer und unter Stickstoffatmosphäre innerhalb eines Zeitraumes von 3 Stunden. Danach wird das Reaktionsgemisch für eine weitere Stunde bei 80 °C temperiert und anschließend auf Raumtemperatur abgekühlt. Der pH-Wert der hergestellten Polymerdispersion wird mit 12,5 %iger Ammoniak-Lösung auf pH 7 bis 8 eingestellt.

Die resultierende Polymerdispersion hat einen Feststoffgehalt von 65 % und ein Koagulat von < 0,050 % über einem 100 µm-Sieb und von < 0,080 % über einem 40 µm-Sieb.

### Anwendungsbeispiel 2 zur Herstellung einer Pigmentpräparation mittels der erfindungsgemäßen Zusammensetzung aus Beispiel 1

Zur Herstellung von 150,0 g einer Pigmentpräparation werden folgende Komponenten in einen Mahlbehälter vorgelegt und mit einer Dissolverscheibe vorgelöst.

| | |
|---|---|
| 17,4 g | der erfindungsgemäßen Zusammensetzung aus Beispiel 1 als Dispergiermittel |
| 30,0 g | Propylenglykol |
| 3,0 g | Entschäumer |
| 0,3 g | Konservierungsmittel |
| 31,8 g | Vollentsalztes Wasser |

Anschließend werden 67,5 g des pulverförmigen Pigments mit dem Color Index PR 112 zugegeben und mit dem Dissolver vordispergiert. Die Feindispergierung erfolgt in einer Perlmühle mittels Zirkonmischoxidperlen der Größe d = 1 mm unter Kühlung. Anschließend werden die Mahlkörper abgetrennt und die Pigmentpräparation isoliert.

Nach dem Mahlprozess wird eine fließfähige, homogene Pigmentpräparation erhalten.

## Patentansprüche

1. Wässrige Zusammensetzungen, die neben Wasser 75 bis 90 Gew.-% Alkylpolyethylenglykolethersulfate enthalten, die eine Mischung aus Verbindungen der Formel (1)
R¹ - O - (CH₂-CH₂-O)ₓ - SO₃M (1)
worin
R¹ eine verzweigte Alkyl- oder Alkenylgruppe mit 8 bis 14 Kohlenstoffatomen und mindestens einem tertiären C-Atom,
x eine Zahl von 3 bis 15,
M ein Alkalimetall- oder Ammoniumion bedeuten,
mit solchen der Formel (2)
R² - O - (CH₂-CH₂-O)_{y} - SO₃M' (2)
worin
R² eine lineare Alkyl- oder Alkenylgruppe mit 8 bis 14 Kohlenstoffatomen,
y eine Zahl von 3 bis 15,
M' ein Alkalimetall- oder Ammoniumion bedeuten, sind
wobei das Mischungsverhältnis von Verbindungen der Formeln (1) und (2) so gewählt ist, dass die Verbindungen der Formel (1) mindestens 10 und höchstens 99 Gew.-% der Gesamtmenge an Verbindungen der Formeln (1) und (2) ausmachen.

2. Wässrige Zusammensetzungen nach Anspruch 1, wobei das Mischungsverhältnis von Verbindungen der Formeln 1 und 2 so gewählt ist, dass die Verbindungen der Formel (1) mindestens 20 und höchstens 80 Gew.-% der Gesamtmenge an Verbindungen der Formeln (1) und (2) ausmachen.

3. Wässrige Zusammensetzungen nach Anspruch 1 und/oder 2, wobei R¹ und R² vorzugsweise für primäre Alkyl- oder Alkenylreste stehen.

4. Wässrige Zusammensetzungen nach einem oder mehreren der Ansprüche 1 bis 3, die 80 bis 88 Gew.-% Verbindungen der Formel (1) und der Formel (2) enthalten.

5. Wässrige Zusammensetzungen nach einem oder mehreren der Ansprüche 1 bis 4, die 6 bis 20 Gew.-% Wasser enthalten.

6. Wässrige Zusammensetzungen nach einem oder mehreren der Ansprüche 1 bis 5, wobei R¹ eine verzweigte Alkylgruppe mit 9 bis 13 Kohlenstoffatomen und mindestens einem tertiären C-Atom bedeutet.

7. Wässrige Zusammensetzungen nach einem oder mehreren der Ansprüche 1 bis 6, wobei x für eine Zahl von 5 bis 10 steht

8. Wässrige Zusammensetzungen nach einem oder mehreren der Ansprüche 1 bis 7, wobei M Natrium bedeutet.

9. Wässrige Zusammensetzungen nach einem oder mehreren der Ansprüche 2 bis 8, wobei R² eine lineare Alkylgruppe mit 9 bis 13 Kohlenstoffatomen bedeutet.

10. Wässrige Zusammensetzungen nach einem oder mehreren der Ansprüche 2 bis 9, wobei y für eine Zahl von 5 bis 10 steht

11. Wässrige Zusammensetzungen nach einem oder mehreren der Ansprüche 2 bis 10, wobei M' Natrium bedeutet.

12. Verfahren zur Herstellung von wässrigen Zusammensetzungen nach einem oder mehreren der Ansprüche 1 bis 11, indem Alkylpolyethylenglykole der Formel R'-O-(CH₂-CH₂-O)ₓ-H oder Mischungen von Alkylpolyethylenglykolen der Formeln R'-O-(CH₂-CH₂-O)ₓ-H und R²-O-(CH2-CH2-O)_{y}-H, worin R¹, R², x und y die oben angegebene Bedeutung haben, mit 0,9 bis 1,3 mol eines Sulfatierungsmittels umgesetzt werden und die entstehenden Schwefelsäurehalbester der Formeln R¹-O-(CH₂-CH₂-O)ₓ-SO₃H bzw. R²-O-(CH₂-CH_{z}-O)_{y}- SO₃H mit Basen neutralisiert werden.

13. Verfahren nach Anspruch 12, wobei das Sulfatierungsmittel SO₃, Oleum, Amidosulfonsäure oder Chlorsulfonsäure ist.

14. Verfahren nach Anspruch 12 und/oder 13, wobei die Base ein Alkalimetallhydroxid oder Ammoniak ist.

15. Verfahren nach einem oder mehreren der Ansprüche 12 bis 14, wobei die Neutralisationstemperatur 30 bis 80 °C beträgt.

16. Verfahren nach einem oder mehreren der Ansprüche 12 bis 15, wobei nach der Neutralisation eine Menge Puffer zugegeben wird, so dass der pH-Wert der erhaltenen Zusammensetzung 6 bis 8 beträgt.

17. Verfahren nach einem oder mehreren der Ansprüche 12 bis 16, welches kontinuierlich durchgeführt wird.

18. Verwendung der wässrigen Zusammensetzungen nach einem oder mehreren der Ansprüche 1 bis 11 als Tenside in der Waschmittel- und Kosmetikindustrie, in industriellen oder gewerblichen Reinigungsmitteln und Haushaltsreinigungsmitteln, als Dispergier- und Netzmittel in Pigmentdispersionen oder als Emulgatoren in der Emulsionspolymerisation.

## Claims

1. An aqueous composition comprising, as well as water, 75% to 90% by weight of alkyl polyethylene glycol ether sulfates which are a mixture of compounds of formula (1)
R¹ - O - (CH₂-CH₂-O)ₓ - SO₃M (1)
where
R¹ is a branched alkyl or alkenyl group having 8 to 14 carbon atoms and at least one tertiary carbon atom,
x is from 3 to 15,
M is an alkali metal ion or an ammonium ion,
with compounds of formula (2)
R² - O - (CH₂-CH₂-O)_{y} - SO₃M' (2)
where
R² is a linear alkyl or alkenyl group having 8 to 14 carbon atoms,
y is from 3 to 15,
M' is an alkali metal ion or an ammonium ion,
wherein the mixing ratio of compounds of formulae (1) and (2) is chosen such that the compounds of formula (1) comprise at least 10% by weight and at most 99% by weight of the total amount of compounds of formulae (1) and (2).

2. The aqueous composition as claimed in claim 1, wherein the mixing ratio of compounds of formulae (1) and (2) is chosen such that the compounds of formula (1) comprise at least 20% by weight and at most 80% by weight of the total amount of compounds of formulae (1) and (2).

3. The aqueous composition as claimed in claim 1 and/or 2, wherein R¹ and R² are each preferably primary alkyl or alkenyl radicals.

4. The aqueous composition as claimed in one or more of claims 1 to 3, comprising 80% to 88% by weight of compounds of formula (1) and of formula (2).

5. The aqueous composition as claimed in one or more of claims 1 to 4, comprising 6% to 20% by weight of water.

6. The aqueous composition as claimed in one or more of claims 1 to 5, wherein R¹ is a branched alkyl group having 9 to 13 carbon atoms and at least one tertiary carbon atom.

7. The aqueous composition as claimed in one or more of claims 1 to 6, wherein x is from 5 to 10.

8. The aqueous composition as claimed in one or more of claims 1 to 7, wherein M is sodium.

9. The aqueous composition as claimed in one or more of claims 2 to 8, wherein R² is a linear alkyl group having 9 to 13 carbon atoms.

10. The aqueous composition as claimed in one or more of claims 2 to 9, wherein y is from 5 to 10.

11. The aqueous composition as claimed in one or more of claims 2 to 10, wherein M' is sodium.

12. A process for producing aqueous compositions as claimed in one or more of claims 1 to 11 by reacting alkyl polyethylene glycols of the formula R¹-O-(CH₂-CH₂-O)ₓ-H or mixtures of alkyl polyethylene glycols of the formulae R¹-O-(CH₂-CH₂-O)ₓ-H and R²-O-(CH₂-CH₂-O)_{y}-H, wherein R¹, R², x and y are each as defined above, with 0.9 to 1.3 mol of a sulfating agent and the resulting acid sulfuric esters of the formulae R¹-O-(CH₂-CH₂-O)ₓ SO₃H and R² -O-(CH₂-CH₂-O)_{y}-SO₃H are neutralized with bases.

13. The process as claimed in claim 12, wherein the sulfating agent is SO₃, oleum, amidosulfonic acid or chlorosulfonic acid.

14. The process as claimed in claim 12 and/or 13, wherein the base is an alkali metal hydroxide or ammonia.

15. The process as claimed in one or more of claims 12 to 14, wherein the neutralization temperature is 30 to 80°C.

16. The process as claimed in one or more of claims 12 to 15, wherein an amount of buffer is added after the neutralization so that the pH of the resulting composition is in the range from 6 to 8.

17. The process as claimed in one or more of claims 12 to 16 in continuous mode operation.

18. The use of the aqueous compositions as claimed in one or more of claims 1 to 11 as surfactants in the laundry detergent and cosmetics industry, in industrial, institution and household cleaners, as dispersing and wetting agents in pigment dispersions or as emulsifiers in emulsion polymerization.

## Revendications

1. Compositions aqueuses, qui contiennent, outre de l'eau, 75 à 90% en poids d'alkylpolyéthylèneglycoléthersulfates, qui sont un mélange de composés de formule (1)
R¹-O- (CH₂-CH₂-O)ₓ-SO₃M (1)
où
R¹ signifie un groupe alkyle ou alcényle ramifié, comprenant 8 à 14 atomes de carbone et au moins un atome de carbone tertiaire,
x signifie un nombre de 3 à 15,
M signifie un ion de métal alcalin ou d'ammonium, avec ceux de formule (2)
R²-O- (CH₂-CH₂-O)_{y}-SO₃M' (2)
où
R² signifie un radical alkyle ou alcényle linéaire, comprenant 8 à 14 atomes de carbone,
y signifie un nombre de 3 à 15,
M' signifie un ion de métal alcalin ou d'ammonium,
le rapport de mélange de composés des formules (1) et (2) étant choisi de manière telle que les composés de formule (1) représentent au moins 10 et au plus 99% en poids de la quantité totale de composés des formules (1) et (2).

2. Compositions aqueuses selon la revendication 1, le rapport de mélange de composés des formules 1 et 2 étant choisi de manière telle que les composés de formule (1) représentent au moins 20 et au plus 80% en poids de la quantité totale de composés des formules (1) et (2).

3. Compositions aqueuses selon la revendication 1 et/ou 2, où R¹ et R² représentent de préférence des radicaux alkyle ou alcényle primaires.

4. Compositions aqueuses selon l'une ou plusieurs des revendications 1 à 3, qui contiennent 80 à 88% en poids de composés de formule (1) et de formule (2).

5. Compositions aqueuses selon l'une ou plusieurs des revendications 1 à 4, qui contiennent 6 à 20% en poids d'eau.

6. Compositions aqueuses selon l'une ou plusieurs des revendications 1 à 5, où R¹ représente un groupe alkyle ramifié comprenant 9 à 13 atomes de carbone et au moins un atome de carbone tertiaire.

7. Compositions aqueuses selon l'une ou plusieurs des revendications 1 à 6, où x représente un nombre de 5 à 10.

8. Compositions aqueuses selon l'une ou plusieurs des revendications 1 à 7, où M signifie sodium.

9. Compositions aqueuses selon l'une ou plusieurs des revendications 2 à 8, où R² signifie un groupe alkyle linéaire comprenant 9 à 13 atomes de carbone.

10. Compositions aqueuses selon l'une ou plusieurs des revendications 2 à 9, où y représente un nombre de 5 à 10.

11. Compositions aqueuses selon l'une ou plusieurs des revendications 2 à 10, où M' signifie sodium.

12. Procédé pour la préparation de compositions aqueuses selon l'une ou plusieurs des revendications 1 à 11, en ce que des alkylpolyéthylèneglycols de formule R¹-O- (CH₂ -CH₂-O)ₓ-H ou des mélanges d'alkylpolyéthylèneglycols des formules R¹-O-(CH₂-CH₂-O)ₓ-H et R²-O-(CH₂-CH₂-O)_{y}-H, où R¹, R² x et y ont la signification indiquée ci-dessus, sont transformés avec 0,9 à 1,3 mole d'un agent de sulfatation et les semi-esters de l'acide sulfurique formés des formules R¹-O-(CH₂-CH₂-O)ₓ-SO₃H ou, selon le cas, R²-O- (CH₂-CH₂-O)_{y}-SO₃H sont neutralisés avec des bases.

13. Procédé selon la revendication 12, où l'agent de sulfatation est le SO₃, l'oléum, l'acide amidosulfonique ou l'acide chlorosulfonique.

14. Procédé selon la revendication 12 et/ou 13, où la base est un hydroxyde de métal alcalin ou l' ammoniaque.

15. Procédé selon l'une ou plusieurs des revendications 12 à 14, où la température de neutralisation est de 30 à 80°C.

16. Procédé selon l'une ou plusieurs des revendications 12 à 15, où, après la neutralisation, une quantité de tampon est ajoutée de façon à ce que le pH de la composition obtenue soit de 6 à 8.

17. Procédé selon l'une ou plusieurs des revendications 12 à 16, qui est réalisé en continu.

18. Utilisation des compositions aqueuses selon l'une ou plusieurs des revendications 1 à 11 comme agents tensioactifs dans l'industrie des agents de lavage et cosmétique, dans les agents de nettoyage industriels ou commerciaux et les agents de nettoyage domestiques, comme dispersants et mouillants dans les dispersions de pigments ou comme émulsifiants dans la polymérisation en émulsion.
